# EUROPÄISCHE PATENTSCHRIFT

(11) **EP 0 616 120 B1**
(45) Veröffentlichungstag und Bekanntmachung des Hinweises auf die Patenterteilung: **24.07.1996**
(21) Anmeldenummer: 93116401.6
(22) Anmeldetag: 09.10.1993
(51) Int. Cl.: F02D 41/14, F16K 1/32

(54) **Brennkraftmaschine mit Lambda-Regelung sowie Kontrollventil hierfür**
Internal combustion engine with lambda control and control valve therefor
Moteur à combustion interne avec régulation lambda et sa soupape de commande

(30) Priorität: 18.03.1993 DE 4308570
(43) Veröffentlichungstag der Anmeldung: 21.09.1994
(73) Patentinhaber: Bayerische Motoren Werke Aktiengesellschaft, 80788 München (DE)
(72) Erfinder: Schueers, Andreas, Dr., D-86916 Kaufering (DE); Kreil, Franz, D-81929 München (DE); Tischer, Jens, D-85598 Baldham (DE); Schäffer, Anton, D-81929 München (DE)

(56) Entgegenhaltungen:
- EP-A- 0 072 578
- EP-A- 0 237 754
- EP-A- 0 402 953
- EP-A- 0 451 313
- WO-A-90/13738
- DE-A- 3 624 441
- PATENT ABSTRACTS OF JAPAN vol. 12, no. 356 (M-745) 26. September 1988 & JP-A-63 113 158 (MAZDA MOTOR CORP) 18. Mai 1988
- PATENT ABSTRACTS OF JAPAN vol. 5, no. 22 (M-54) 10. Februar 1981 & JP-A-55 151 133 (NISSAN MOTOR CO LTD) 25. November 1980
- VDI-Nachrichten, Nr. 39; 27/09/91; S.10

## Beschreibung

Die Erfindung betrifft eine Brennkraftmaschine mit Lambda-Regelung mit einem Meßorgan für die angesaugte Luftmenge sowie mit einem die Regelung beeinflußenden Störglied.

Ottomotoren, d.h. quantitätsgesteuerte Brennkraftmaschinen, die mit Lambda-Regelung arbeiten, zeichnen sich bei intakter Lambda-Regelung durch äußerst geringe Schadstoffemissionen aus. Wie bekannt stellt die Lambda-Regelung an allen Betriebspunkten ein stöchometrisches Gemisch ein, so daß ein im Abgassystem der Brennkraftmaschine angeordneter Drei-Wege-Katalysator eine optimale Schadstoffreduktion vornehmen kann. Es bestehen gesetzliche Vorschriften, nach denen die Funktionstüchtigkeit der Lambda-Regelung im Rahmen der existierenden Abgas-Sonderuntersuchung für Kraftfahrzeuge mit Brennkraftmaschinen überprüft werden soll. Hiernach soll die Lambda-Regelung durch ein irgendwie geartetes Störglied beeinflußt werden, um dann anhand einer einfachen Abgasanalyse erkennen zu können, ob die Lambda-Regelung wie gewünscht arbeitet. Beschrieben ist dies sowie eine einfache, jedoch nicht absolut zuverlässige Maßnahme zur Aufbringung der Störung in der DE-Zeitung VDI-Nachrichten Nr. 39 vom 27.09.91, Seite 10.

Ein einfach bedienbares sowie funktionssicheres Störglied zur Beeinflussung der Lambda-Regelung aufzuzeigen, ist Aufgabe der vorliegenden Erfindung.

Nach einem ersten Lösungsvorschlag ist das Störglied als ein der Brennkraftmaschine stromab des Luftmengen-Meßorganes Falschluft zuführendes Kontrollventil ausgebildet, nach einem zweiten Lösungsvorschlag als ein den Druck im Kraftstoffsystem veränderndes Kontrollventil, wobei das Kontrollventil jeweils ein federbelasteter Taster mit den in den Ansprüchen 1 oder 11 angegebenen Merkmalen ist. Vorteilhafte Aus- und Weiterbildungen der Erfindung sind Inhalt der Unteransprüche.

Erfindungsgemäß ist ein separates Kontrollventil vorgesehen, das lediglich für die Durchführung des Tests der Lambda-Regelung betätigt werden muß. Aufwendige Zusatzmaßnahmen sind somit nicht erforderlich. Zwar könnte beispielsweise die Zugabe von Falschluft auch durch Abziehen eines geeigneten Luftführungsschlauches von einem Anschlußstutzen erfolgen, jedoch besteht hierbei die Gefahr der Beschädigung dieses Schlauches. Ferner müßten bei einer derartigen Maßnahme Schlauchschellen gelöst werden, darüberhinaus besteht die Gefahr, daß das Wiederaufstecken des Schlauches auf seinen Anschlußstutzen vergessen wird. In gleicher Weise könnte beispielsweise auch das Kraftstoffsystem der Brennkraftmaschine dadurch verstimmt werden, daß ein geeigneter Kraftstoffschlauch abgequetscht wird. Jedoch würde auch diese Maßnahme letztendlich zu einer Beschädigung des Schlauches führen. Darüberhinaus ist die Auswirkung dieser genannten Störungen in ihrer Größe nicht dosierbar. Derartige negative Auswirkungen werden durch das erfindungsgemäße Vorsehen eines separaten Kontrollventiles vermieden.

Erfindungsgemäß besteht eine Möglichkeit zum Aufbringen einer Störgröße in der Einleitung von Störluft in das Brennkraftmaschine-Ansaugsystem. Dabei darf diese zusätzlich Zugeführte Störluft nicht von einem vorhandenen Meßorgan für die angesaugte Luftmenge, so beispielsweise einem Hitzdraht- Luftmassenmesser, erkannt werden, da es ja alleinig die Funktion der Lambda-Regelung zu überprüfen gilt. Dieses Kontrollventil, das bei Betätigung Störluft zugibt, kann entweder direkt im Ansaugkanal der Brennkraftmaschine oder in einem beliebigen Luftkanal, der stromab eines Luftmengen-Meßorganes im Ansaugkanal mündet, angeordnet sein. Bei diesem Luftkanal kann es sich beispielsweise um einen Bypaßkanal zur Leerlaufregelung der Brennkraftmaschine handeln, ein weiteres Beispiel ist die im Brennkraftmaschinen-Ansaugkanal mündende Leitung der Kurbelgehäuse-Entlüftung. Dabei kann das Kontrollventil selbstverständlich auch derart angeordnet sein, daß die Störluft zunächst in das Kurbelgehäuse der Brennkraftmaschine gelangt und schließlich über die Kurbelgehäuseentlüftung von der Brennkraftmaschine wieder angesaugt wird. Beispielsweise ist es in diesem Zusammenhang möglich, das Kontrollventil im Zylinderkopfdeckel oder auch im Öleinfülldeckel anzuordnen, was es auf einfache Weise möglich macht, bereits im Einsatz befindliche Brennkraftmaschinen mit einem erfindungsgemäßen Lambda-Regelungs-Kontrollsystem nachzurüsten.

In eine bestehende Luftkanalleitung kann das Kontrollventil einfach eingebaut werden, wenn es als Abzweigstück ausgebildet ist, das mit zwei miteinander verbundenen Anschlüssen für den Luftkanal sowie mit einer von dieser Luftkanal-Verbindung abzweigenden Luftleitung versehen ist. Diese Luftleitung ist üblicherweise verschlossen, bei Bedarf, d.h. bei Betätigung des Kontrollventils, wird diese Luftleitung geöffnet. Besonders vorteilhaft kann es in diesem Zusammenhang sein, bei Betätigung des Kontrollventiles dann gleichzeitig die reguläre Luftkanal-Verbindung zu unterbrechen. Besonders einfach zu bedienen ist das Kontrollventil dabei, wenn dieses als federbelasteter Taster ausgebildet ist. In seiner Ruhestellung, die durch die Feder oder ein ähnliches Kraftspeicherelement vorgegeben ist, verschließt dieser Taster die letztlich im Brennkraftmaschinen-Ansaugkanal mündende Luftleitung, bei Betätigung des Tasters entgegen der Federkraft hingegen wird das freie Ende dieser Luftleitung freigegeben, so daß die Brennkraftmaschine über diese Luftleitung Störluft ansaugen kann. Beansprucht wird auch ein besonders vorteilhaft ausgebildeter Taster bzw. ein entsprechendes Kontrollventil, der bzw. das an späterer Stelle noch näher beschrieben wird.

Wie bereits eingangs erwähnt, ist es auch möglich, das Störglied als ein den Druck im Kraftstoffsystem veränderndes Kontrollventil auszubilden. Auch ein derartiges Kontrollventil schließt Fehlbedienungen oder Zerstörungen weitestgehend aus. Angeordnet sein kann dieses Kontrollventil zum einen in einer Kraftstoffleitung des Brennkraftmaschinen-Kraftstoffsystemes. Dabei kann das Kontrollventil als Drosselventil ausgebildet sein, und somit den Druck in den zu den Kraftstoff-Einspritzdüsen führenden Kraftstoffleitungen herabsetzen. Daneben kann das Kontrollventil aber auch in einer Bypass-Leitung zu den Kraftstoffdüsen angeordnet sein, wobei diese Bypassleitung in einer ohnehin üblicherweise vorhandenen Kraftstoff-Rücklaufleitung mündet. Wird nun das Kontrollventil derart betätigt, daß die ansonsten geschlossene Bypass-Leitung geöffnet wird, so wird auch durch diese Maßnahme der Druck vor den Kraftstoff-Einspritzventilen bzw. allgemein vor der Kraftstoff-Zumeßvorrichtung herabgesetzt. Daneben kann das Kontrollventil, das wiederum als federbelasteter Taster ausgebildet ist, einen üblicherweise ohnehin vorhandenen Druckregler für das Kraftstoffsystem verstimmen.

Ein Taster bzw. ein Kontrollventil zur Beigabe von Störluft in das Ansaugsystem einer Brennkraftmaschine soll äußerst einfach zu betätigen sein, andererseits soll jedoch bei nicht betätigtem Kontrollventil ein Störluftübertritt über dieses Ventil in das Ansaugsystem der Brennkraftmaschine sicher ausgeschlossen sein. Da jedoch im Ansaugsystem der Brennkraftmaschine ein nicht unerheblicher Unterdruck auftreten kann, muß das Schließfederelement, das bei nicht betätigtem Kontrollventil das Ventil-Verschlußelement auf seinen Ventilsitz preßt, ausreichend stark dimensioniert werden, um eine durch den Unterdruck hervorgerufene Leckage über das Kontrollventil zu vermeiden. Eine derartige starke Federelement-Dimensionierung steht jedoch einer einfachen Bedienbarkeit des Kontrollventiles wieder entgegen. Daher wird vorgeschlagen, daß das Verschlußelement und der Ventilsitz eines Kontrollventiles derart ausgebildet sind, daß bei Unterdruck im Leitungsstück das auf dem Ventilsitz aufliegende Verschlußelement durch den Unterdruck gegen den Ventilsitz gepreßt wird. Somit wird der im Ansaugsystem der Brennkraftmaschine bzw. im zugehörigen Leitungsstück vorhandene Unterdruck zu Hilfe genommen, um das Verschlußelement absolut sicher dichtend gegen den Ventilsitz zu pressen, d. h. das Verschlußelement ist so angeordnet und der Ventilsitz ist so ausgebildet, daß der Unterdruck am Verschlußelement angreifen kann und dieses gegen den Ventilsitz zieht. Am einfachsten ist der Ventilsitz hierzu aus der Wand eines Rohrstückes herausgearbeitet, das in das Leitungsstück des Brennkraftmaschinen-Ansaugsystemes einsetzbar ist. Liegt dann das Verschlußelement außerhalb des eigentlichen Rohrstückes auf dem Ventilsitz auf, so wirkt ein Unterdruck innerhalb des Rohrstückes stets in der Weise unterstützend, daß das Verschlußelement gegen den Ventilsitz gepreßt wird. Das Rohrstück bietet darüber hinaus den weiteren Vorteil, daß das Kontrollventil einfach montiert werden kann und zwar nicht nur an neu gefertigten Brennkraftmaschinen, sondern im Sinne einer Nachrüstlösung auch am bereits im Betrieb befindlichen Brennkraftmaschinen. Hierzu muß lediglich ein geeignetes Leitungsstück, das mit dem Ansaugsystem der Brennkraftmaschine verbunden ist, auseinandergetrennt werden, wonach in dieses Leitungsstück das erfindungsgemäße Kontrollventil eingesetzt werden kann. In einer anderen Ausführungsform ist es auch möglich, das Kontrollventil über ein einzelnes Leitungsstück an das Ansaugsystem der Brennkraftmaschine anzuschließen.

Wie bereits erwähnt ist es vorteilhaft, einen Taster vorzusehen, da eine mit einem Taster auszuführende Druckbewegung zum Betätigen des Kontrollventiles leichter zu bewerkstelligen ist als eine Zug- oder eine Drehbewegung. Dieser Taster kann Bestandteil eines das Rohrstück im wesentlichen umfassenden Betätigungselementes sein, das ferner das Verschlußelement trägt und zwar insbesondere über ein Trägerteil, wobei durch die umfassende Gestaltung das Betätigungselement bzw. der Taster sicher geführt und zentriert ist. Ferner kann es empfehlenswert sein, ein Labyrinth für die Störluft vorzusehen, um bei geöffnetem Kontrollventil das Eindringen von Schmutzpartikeln in das Ansaugsystem der Brennkraftmaschine zu verhindern. Gebildet werden kann dieses Labyrinth auf einfache Weise durch das Beätigungselement sowie einen von der Wand des Rohrstückes abkragenden Vorsprung. Im Sinne eines einfachen Zusammenbaus des Kontrollventiles kann dabei der Taster mit dem Trägerteil über eine Schnappverbindung verbunden sein. Dies sowie weitere Vorteile der Erfindung geht auch aus der folgenden Beschreibung von bevorzugten Ausführungsbeispielen hervor. Es zeigt
- Fig. 1: in einer Prinzipdarstellung eine Brennkraftmaschine mit verschiedenartig erfindungsgemäß angeordneten Kontrollventilen,
- Fig. 2: ein Störluft zu führendes Kontrollventil in Ruhestellung,
- Fig. 3: dieses Kontrollventil bei Betätigung,
- Fig. 4: eine perspektivische Prinzipskizze eines weiteren Kontrollventiles in Explosionsdarstellung, sowie
- Fig. 5: einen Schnitt durch ein gegenüber Fig. 4 geringfügig anders gestaltetes erfindungsgemäßes Kontrollventil.

Mit der Bezugsziffer 1 ist eine vierzylindrige Brennkraftmaschine bezeichnet, die ein in ihrer Gesamtheit mit 2 bezeichnetes Ansaugsystem sowie ein mit 3 bezeichnetes Abgassystem besitzt. Im Ansaugsystem 2 ist neben einer nicht gezeigten Drosselklappe ein Meßorgan 4 zur Bestimmung der angesaugten Luftmenge vorgesehen, ferner münden in die einzelnen Ansaugkanäle der einzelnen Brennkraftmaschinen-Zylinder lediglich abstrakt dargestellte Kraftstoff-Einspritzventile 5. über das Abgassystem 3 gelangen die Abgase der Brennkraftmaschine letztendlich in die Umgebung. Hierbei passieren sie zunächst eine Lambda-Sonde 6 und daran anschließend einen Katalysator-Schalldämpfer 7. Damit der Katalysator 7 die Schadstoffe im Abgas der Brennkraftmaschine 1 erfolgreich konvertieren kann, muß der Brennkraftmaschine 1 ein exakt dosiertes stöchometrisches Gemisch zugeführt werden. Die Regelung dieses Gemisches bzw. der zugeführten Kraftstoffmenge erfolgt mit Hilfe eines nicht gezeigten elektronischen Regelungssystemes, das unter anderem auf die Signale der Lambda-Sonde 6 zurückgreift. Dieses Regelungssystem wird dabei als Lambda-Regelung bezeichnet.

Will man erkennen, ob die Lambda-Regelung erfolgreich arbeitet, so muß dieses Regelsystem mit einer Störgröße beaufschlagt werden. Eine erste Möglichkeit hierfür liegt in der Verstimmung des Kraftstoff-Versorgungssystemes der Brennkraftmaschine 1, das in seiner Gesamtheit mit der Bezugsziffer 8 bezeichnet ist. Im einzelnen besteht dieses Kraftstoffversorgungssystem aus einer Vorlaufleitung 8 a, die in einem Druckregler 8 b mündet, von dem neben einer Rücklaufleitung 8 c eine Versorgungsleitung 8 d für die Einspritzventile 5 abzweigt. Über eine Fluidsteuerleitung 8 e wird der Druckregler ferner wie bekannt mit dem Druck im Ansaugsystem 2 der Brennkraftmaschine beaufschlagt.

Es gibt verschiedene Möglichkeiten, das Kraftstoffversorgungssystem 8 mittels eines Kontrollventiles 10 zu verstimmen. Sinn dieses Kontrollventiles ist es, durch Betätigen desselben bei einem konstanten Betriebspunkt der Brennkraftmaschine 1 unabhängig von den Signalen des Ansaugluftmengen-Meßorganes 4 ein anderes Gemisch im Ansaugsystem 2 zu erzeugen und auch eine andere Zusammensetzung der Brennkraftmaschine-Abgase zu erzielen, so daß aufgrund einer Betätigung dieses Kontrollventiles 10 die Lambda-Regelung tätig werden muß. Erkannt werden kann ein Tätigwerden der Lambda-Regelung daran, daß bei Betätigung des Kontrollventiles 10 kurzfristig ein Abgas anderer Zusammensetzung das Abgassystem 3 verläßt - dies kann durch Messung einer oder mehrerer Abgaskomponenten, so beispielsweise von CO und HC erkannt werden - wonach bei Tätigwerden der Lambda-Regelung sich wieder die ursprünglich vorliegende Abgaszusammensetzung einstellen muß.

Nach einer ersten Ausführungsform ist das Kontrollventil 10 in der Fluidsteuerleitung 8 e angeordnet. Durch Betätigung dieses Kontrollventiles 10 wird dem Druckregler 8 b ein verfälschter Steuerdruck übermittelt, so daß hierdurch der Brennkraftmaschine 1 ein Gemisch anderer Zusammensetzung zugeführt wird. Insbesondere ist hierbei das Kontrollventil 10 als Drosselventil ausgebildet. Alternativ kann sich ein ebensolches als Drosselventil wirkendes Kontrollventil 10 in der Versorgungsleitung 8 d befinden. Bei Betätigung des Kontrollventiles 10 an dieser Stelle erhalten die Einspritzventile 5 eine geringere Kraftstoffmenge, wodurch abermals wie gewünscht das der Brennkraftmaschine 1 zugeführte Gemisch verändert wird. In einer weiteren Ausführungsform ist das Kontrollventil 10 in einer Bypass-Leitung 8 f angeordnet, die die Versorgungsleitung 8 d mit der Rücklaufleitung 8 c verbindet. Üblicherweise ist dieses Kontrollventil 10 in dieser Bypassleitung 8 f geschlossen; bei Betätigung des Kontrollventiles 10 hingegen fließt eine Teilmenge von Kraftstoff unter Umgehung der Einspritzventile 5 direkt in die Rücklaufleitung, so daß abermals die Einspritzventile 5 eine geringere Menge Kraftstoff erhalten, so daß wiederum ein verfälschtes Gemisch in die Brennkraftmaschinen-Zylinder gelangt.

Um zu gewährleisten, daß die Verstimmung des Kraftstoffversorgungssystems jeweils nur in einem gewünschten Ausmaß erfolgt, ist ein definiert arbeitendes Kontrollventil 10 vorgesehen, dieses definiert arbeitende Kontrollventil 10 gibt dabei entweder einen definierten Querschnitt frei oder drosselt nur in einem definierten Maße. Insbesondere ist dieses Kontrollventil 10 dabei als federbelasteter Taster ausgebildet, der in seiner Ruhestellung, die durch das Federelement bestimmt ist, keinerlei Auswirkungen auf das Kraftstoffversorgungssystem 8 hat, während er bei Betätigunggegen die Federkraft die gewünschte Störung einleitet.

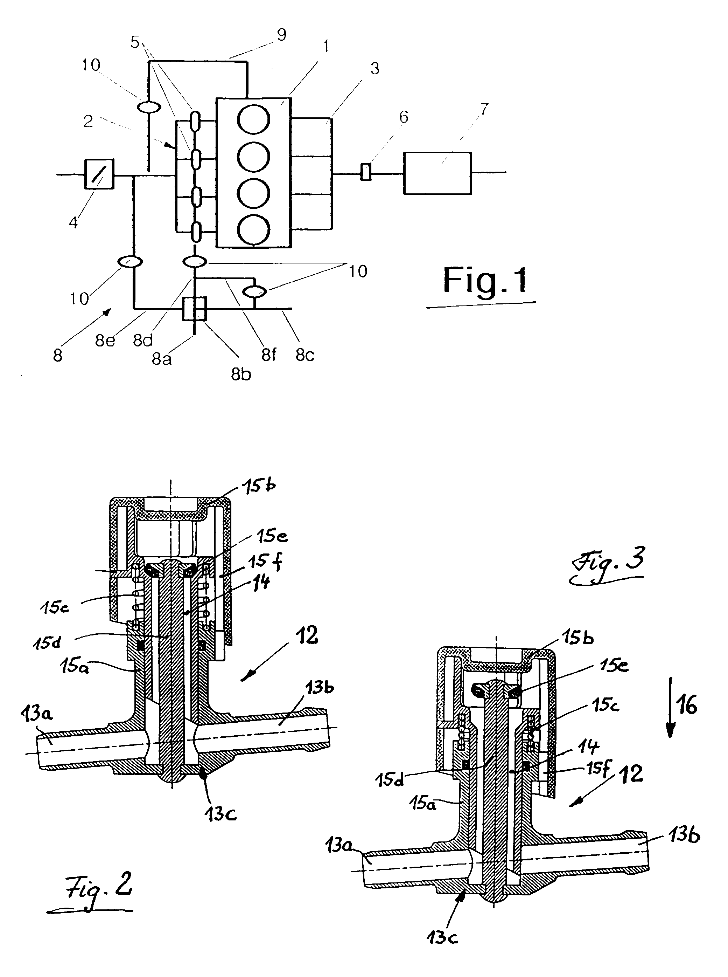

Bei einer weiteren Ausführungsform der Erfindung führt das Störglied zur Verstimmung der Lambda-Regelung der Brennkraftmaschine 1 stromab des Luftmengen-Meßorganes 4 Störluft zu. Auch hierzu ist ein Kontrollventil 10 vorgesehen, das in einem im Ansaugsystem 2 mündenden Luftkanal 9 angeordnet ist. Bei der Darstellung nach Figur 1 handelt es sich bei diesem Luftkanal 9 um den Kanal der Kurbelgehäuse-Entlüftung, d.h. der Luftkanal 9 verbindet das Kurbelgehäuse der Brennkraftmaschine 1 mit dem Ansaugsystem 2. Selbstverständlich ist in diesem Luftkanal 9 ein nicht gezeigtes Steuerventil vorgesehen, das im Kurbelgehäuse der Brennkraftmaschine 1 einen definierten, gewünschten Unterdruck einregelt. Wird nun das im Luftkanal 9 angeordnete Kontrollventil 10 betätigt, so wird der Luftkanal 9 zur Seite der Brennkraftmaschine 1 hin geschlossen, während über dieses Kontrollventil 10 in das Ansaugsystem 2 der Brennkraftmaschine 1 Störluft gelangen kann. Selbstverständlich kann das Kontrollventil 10 jedoch auch in anderen Luftkanälen angeordnet sein, die im Brennkraftmaschinen-Ansaugsystem 2 münden.

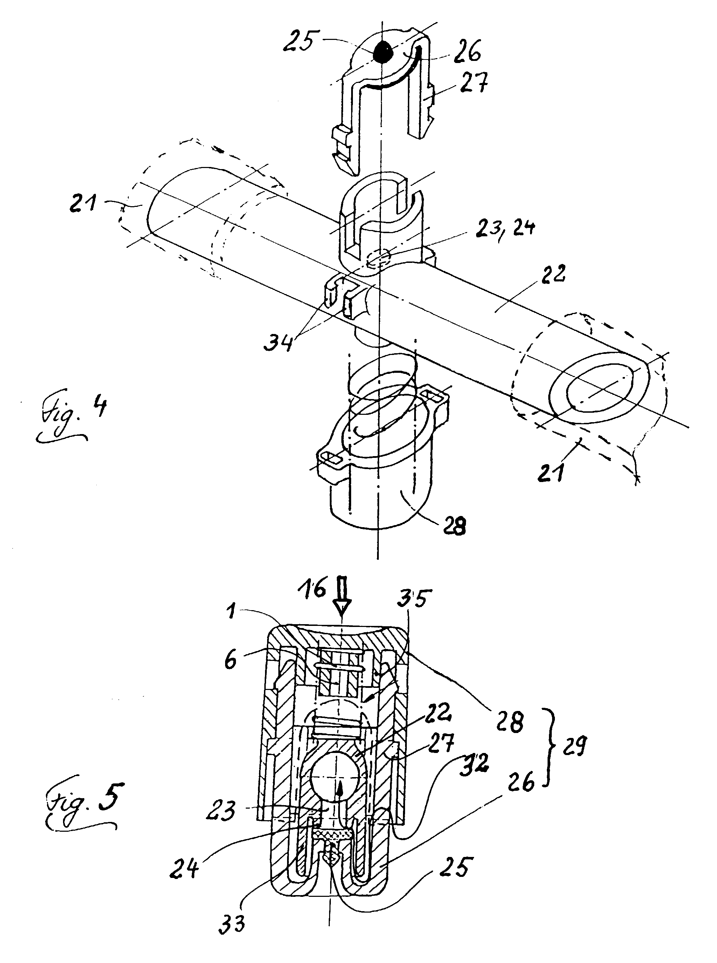

Eine erste bevorzugte Ausführungsform eines in einem Luftkanal 9 angeordneten Kontrollventiles 10 zeigen die Figuren 2 und 3, wobei in Figur 2 dieses Kontrollventil 10 in Ruhestellung und in Figur 3 bei Betätigung dargestellt ist. Dabei ist das Kontrollventil 10 als Abzweigstück 12 ausgebildet, das zwei miteinander verbundene Anschlüsse 13 a, 13 b aufweist, die als sogenannte Luftkanal-Verbindung 13 c für den unterbrochenen Luftkanal 9 wirken. Ferner besitzt das Abzweigstück 12 eine von der Luftkanal-Verbindung abzweigende Luftleitung 14. Die Luftleitung 14 verläuft innerhalb einer Tasterführung 15a für einen Tasterkopf 15 b. Die Tasterführung 15a, der Tasterkopf 15 b sowie ein sich zwischen diesen Elementen abstützendes Federelement 15 c bilden gemeinsam einen in seiner Gesamtheit mit 15 bezeichneten Taster. Weitere Elemente dieses Tasters 15 sind ein am Abzweigstück 12 befestigter Dorn 15 d, der eine mit dem im wesentlichen topfförmigen Tasterkopf 15 b zusammenwirkende Dichtplatte 15 e trägt.

Wie Figur 2 zeigt, liegt in der Ruhestellung des nicht betätigten Tasters 15 die Dichtplatte 15 e am Tasterkopf 15 b an, so daß das freie Ende der Luftleitung 14, die in der die Anschlüsse 13 a, 13 b miteinander verbindenden Luftkanal-Verbindung 13 c mündet, verschließt. Wird hingegen der Taster 15 betätigt, d. h. wird somit der Tasterkopf 15 b gemäß Pfeilrichtung 16 niedergedrückt - dies zeigt Figur 3 -, so wird das freie Ende der Luftleitung 14 freigegeben und gleichzeitig die Luftkanal-Verbindung 13 c unterbrochen. Über die Durchbrüche 15 f im Tasterkopf 15 b kann nun Umgebungsluft, d. h. Störluft in die Luftleitung 14 gelangen und schließlich über den Anschluß 13 a sowie den sich daran anschließenden Luftkanal 9 in das Ansaugsystem 2 der Brennkraftmaschine 1 eingeleitet werden. Wird anschließend der Tasterkopf 15 b wieder losgelassen, so bewegt er sich durch die Kraft des Federelementes 15 c wieder in seine Ruhelage gemäß Figur 2 und verschließt hierbei die Luftleitung 14, so daß der Ausgangszustand wieder hergestellt ist.

Ein weiteres einfach und funktionssicher gestaltetes Kontrollventil 10, bei dessen Betätigung eine Luftkanalverbindung nicht unterbrochen wird, zeigen die Fig. 4 und 5. Hier ist mit der Bezugsziffer 21 ein aufgetrenntes Leitungsstück bezeichnet, das mit dem Ansaugsystem einer Brennkraftmaschine verbunden ist. In dieses Leitungsstück kann das gezeigte Kontrollventil 10 eingesetzt werden, welches hierzu ein Rohrstück 22 aufweist, auf dessen Enden die beiden freien Enden des Leitungsstückes 21 aufgesteckt werden können. Die Wand des Rohrstückes 22 weist einen Durchbruch 23 auf, dessen Randbereich als Ventilsitz 24 für ein Verschlußelement 25 ausgebildet ist. Liegt das Verschlußelement 25 auf dem Ventilsitz 24 auf, so ist folglich der Durchbruch 23 abgedichtet, wird hingegen das Verschlußelement 25 vom Ventilsitz 24 abgehoben, so kann über den Durchbruch 23 Umgebungsluft (Störluft) in das Rohrstück 22 gelangen, insbesondere dann, wenn innerhalb des Rohrstückes 22 ein Unterdruck vorliegt. Wie bereits eingangs erläutert, ist ein derartiger Luftübertritt erwünscht, wenn dem Ansaugsystem einer Brennkraftmaschine über das Leitungsstück 21 bzw. über das in dieses Leitungsstück 21 eingebundene Kontrollventil 10 Störluft zugeführt werden soll. Abweichend von der gezeigten Darstellung kann selbstverständlich auch nur eines der beiden Rohrstücke 22 im Ansaugsystem der Brennkraftmaschine münden, während des andere Rohrstück 22 beispielsweise mittels eines Stopfens verschlossen wird.

Wie Fig. 5 zeigt, ist das Verschlußelement 25 in ein Trägerteil 26 eingeknüpft, das derart gestaltete Arme 27 aufweist, daß eine Schnappverbindung zwischen dem Trägerteil 26 sowie einem Taster 28 hergestellt werden kann. Das Trägerteil 26 sowie der Taster 28 bilden dabei das sog. Betätigungselement 29, durch dessen Betätigung das Verschlußelement 25 vom Ventilsitz 24 abgehoben wird. Hierzu wird der Taster 28 wieder gemäß Pfeil 16 bewegt.

In der in Fig. 5 gezeigten Position, in der das Verschlußelement 25 auf dem Ventilsitz 24 aufliegt, ist das Kontrollventil 10 geschlossen. Dies wird insbesondere durch ein Federelement 31 gewährleistet, das als Druckfeder ausgebildet ist und dementsprechend zwischen dem Taster 28 sowie dem Rohrstück 22 eingespannt ist. Gleichzeitig zeitig sowie das Federelement 31 unterstützend wird das Verschlußelement 25 auch durch den im Rohrstück 22 herrschenden Unterdruck gegen den Ventilsitz 24 gepreßt. Aufgrund dieser unterstützenden Schließkraft kann die Federkraft des Federelementes 31 etwas geringer gewählt werden, was bei einem gewollten öffnen des Kontrollventiles durch Betätigen des Betätigungselementes 29 von Vorteil ist. Dann kann - wie bereits erläutert - bei geöffnetem Kontrollventil 10 Umgebungsluft über im Betätigungselement 29 vorgesehene Spalte (so beispielsweise im Bereich der Schnappverbindung, aber auch über den Spalt zwischen der Unterkante des Tasters 28 sowie dem Trägerteil 26) zum vom Ventilsitz 24 abgehobenen Verschlußelement 25 gelangen. Dabei passiert diese Störluft ein Labyrinth 32, das durch einen Vorsprung 33 der Wand des Rohrstückes 22 in Zusammenwirken mit dem Trägerteil 26 gebildet wird. In diesem Labyrinth 32 werden aufgrund der Umlenkung des Störluftstromes ggf. vorhandene Schmutzpartikel abgesondert, so daß der Brennkraftmaschine im wesentlichen gefilterte Störluft zugeführt wird.

Der Taster 28 ist an der Innenseite seines Kopfbereiches mit einer umlaufenden Stützrippe 35 versehen, die der Sicherung der Schnappverbindung mit den Armen 27 des Trägerteiles 26 dient. Auch ist ein Anschlag 36 vorgesehen, der den möglichen Tasterweg gegenüber dem Rohrstück 22 begrenzt. Dieser Anschlag 36 führt gleichzeitig das Federelement 31. Desweiteren sind - wie Fig. 4 zeigt - aus dem Rohrstück 22 zwei gegenüberliegende Führungen 34 herausgearbeitet, die der Führung der Arme 27 des Trägerteiles 26 dienen und somit den Zusammenbau des gezeigten Kontrollventiles 10 noch weiter vereinfachen.

## Patentansprüche

1. Brennkraftmaschine mit Lambda-Regelung, mit einem Meßorgan (4) für die angesaugte Luftmenge sowie mit einem die Lambda-Regelung beeinflussenden Störglied,
dadurch gekennzeichnet, daß das Störglied ein der Brennkraftmaschine (1) stromab des Luftmengen-Meßorganes (4) Falschluft zuführendes Kontrollventil (10) ist, das als federbelasteter Taster (15, 28) ausgebildet ist, der in Ruhestellung das freie Ende einer letztlich im Brennkraftmaschinen-Ansaugsystem (2) mündenden Luftleitung (14, 23) verschließt und bei Betätigung dieses freie Ende freigibt.

2. Brennkraftmaschine nach Anspruch 1,
dadurch gekennzeichnet, daß das Kontrollventil (10) im Brennkraftmaschinen-Ansaugsystem (2) oder in einem in diesem mündenden Luftkanal (9) angeordnet ist.

3. Brennkraftmaschine nach Anspruch 2,
dadurch gekennzeichnet, daß das Kontrollventil (10) als Abzweigstück (12) ausgebildet ist mit zwei miteinander verbundenen Anschlüssen (13 a, 13 b) für den Luftkanal (9) sowie einer von der Luftkanal-Verbindung (13c) abzweigenden Luftleitung (14).

4. Brennkraftmaschine nach einem der vorangegangenen Ansprüche, gekennzeichnet durch zumindest eines der folgenden Merkmale:
- der Taster (15) unterbricht bei Betätigung die Luftkanal-Verbindung (13c)
- der Taster (15) weist einen im wesentlichen topfförmigen Tasterkopf (15 b) auf
- der Tasterkopf (15 b) ist einer Tasterführung (15 a) beweglich gelagert
- der Tasterkopf (15 b) umgibt die Tasterführung (15 a)
- die Luftleitung (14) verläuft innerhalb der Tasterführung (15 a)
- ein am Abzweigstück (12) befestigter Dorn (15 d) trägt eine mit dem Tasterkopf (15 b) zusammenwirkende und dabei das freie Ende der Luftleitung (14) freigebende/verschließende Dichtplatte (15 e).

5. Brennkraftmaschine nach einem der vorangegangenen Ansprüche,
dadurch gekennzeichnet, daß sich das Kontrollventil (10) in einem mit dem Ansaugsystem der Brennkraftmaschine verbundenen Leitungsstück (21) befindet und mit einem gegen die Kraft eines Federelementes (31) von einem Ventilsitz (24) abhebbaren und im abgehobenen Zustand einen Übertritt von Störluft in das Leitungsstück (21) ermöglichenden Verschlußelement (25) versehen ist, wobei das Verschlußelement (25) und der Ventilsitz (24) derart ausgebildet sind, daß bei Unterdruck im Leitungsstück (21) das auf dem Ventilsitz (24) aufliegende Verschlußelement (25) durch den Unterdruck gegen den Ventilsitz (24) gepreßt wird.

6. Brennkraftmaschine nach Anspruch 5,
dadurch gekennzeichnet, daß der Ventilsitz (24) im wesentlichen aus der Wand eines Rohrstückes (22) herausgearbeitet ist, das zumindest einseitig in das Leitungsstück (21) einsetzbar ist.

7. Brennkraftmaschine nach Anspruch 5 oder 6,
dadurch gekennzeichnet, daß das Verschlußelement (25) Bestandteil eines das Rohrstück (22) im wesentlichen umfassenden Betätigungselementes (29) ist, das als weiteren Bestandteil einen bezüglich des Rohrstückes (22) auf der dem Verschlußelement (25) gegenüberliegenden Seite angeordneten Taster (28) aufweist.

8. Brennkraftmaschine nach einem der Ansprüche 5 bis 7,
dadurch gekennzeichnet, daß die Wand des Rohrstückes (22) nahe des Ventilsitzes (24) mit einem Vorsprung (23) versehen ist, der gemeinsam mit einem Trägerteil (26) des Betätigungselementes (29) ein Labyrinth (32) für die Störluft bildet.

9. Brennkraftmaschine nach einem der Ansprüche 5 bis 8,
dadurch gekennzeichnet, daß das Trägerteil (26) mit dem Taster (28) über eine Schnappverbindung verbunden ist, für die eine Stützrippe (35) vorgesehen ist.

10. Brennkraftmaschine nach einem der Ansprüche 5 bis 9,
dadurch gekennzeichnet, daß die die Schnappverbindung herstellenden Arme (27) des Trägerteiles (26) in aus dem Rohrstück (22) herausgearbeiteten Führungen (34) geführt sind.

11. Brennkraftmaschine mit Lambda-Regelung mit einem Meßorgan (4) für die angesaugte Luftmenge sowie mit einem die Regelung beeinflussenden Störglied,
dadurch gekennzeichnet, daß das Störglied ein den Druck im Kraftstoffversorgungssystem (8) veränderndes Kontrollventil (10) ist, das als federbelasteter Taster (15) ausgebildet ist, der nur bei Betätigung die gewünschte Störung im Kraftstoffversorgungssystem (8) verursacht.

12. Brennkraftmaschine nach Anspruch 11,
dadurch gekennzeichnet, daß das Kontrollventil (10) in einer Kraftstoffleitung (8 d, 8 f) oder einer zu einem Kraftstoff-Druckregler (8 b) führenden Fluidsteuerleitung (8 e) angeordnet ist.

## Claims

1. An internal combustion engine with lambda control, with a measuring means (4) for the aspirated air quantity and with a disturbance element which influences the lambda control,
characterised in that the disturbance element is a control valve (10) which feeds false air to the internal combustion engine (1) downstream of the air quantity measuring means (4), arranged as a spring loaded momentary contact switch (15, 28) which in its resting position seals the free end of an air line (14, 23) which ultimately opens into the intake system (2) of the internal combustion engine and upon actuation opens this free end.

2. An internal combustion engine according to claim 1,
characterised in that the control valve (10) is arranged in the intake system (2) of the internal combustion engine or in an air duct (9) opening into this intake system (2).

3. An internal combustion engine according to claim 2,
characterised in that the control valve (10) is formed as a branch piece (12) with two interconnected ports (13a, 13b) for the air duct (9), together with an air line (14) branching from the air duct connection (13c).

4. An internal combustion engine according to any one of the preceding claims, characterised by at least one of the following properties:
- the momentary contact switch (15) interrupts the air duct connection (13c) upon actuation
- the momentary contact switch (15) is provided with a substantially pot-shaped momentary contact switch head (15b)
- the momentary contact switch head (15b) is pivotably-mounted in a momentary contact switch guide (15a)
- the momentary contact switch head (15b) envelops the momentary contact switch guide (15a)
- the air line (14) runs within the momentary contact switch guide (15a)
- a tongue (15d) secured to the branch piece (12) bears a sealing plate (15e) which works together with the momentary contact switch head (15b) and thereby opens/closes the free end of the air line (14).

5. An internal combustion engine according to any one of the preceding claims,
characterised in that the control valve (10) is arranged in a line section (21) connected to the intake system of the internal combustion engine and is provided with a sealing element (25) which can be lifted off a valve seat (24) against the force of a spring element (31) and in its elevated position facilitates the passage of disturbance air into the line section (21), with the sealing element (25) and the valve seat (24) formed such that if there is a partial vacuum in the line section (21) then the sealing element (25) lying on the valve seat (24) is pressed against the valve seat (24) by the partial vacuum.

6. An internal combustion engine according to claim 5,
characterised in that the valve seat (24) is substantially worked out of the wall of a pipe section (22) which can be inserted at least on one side into the line section (21).

7. An internal combustion engine according to either claim 5 or claim 6,
characterised in that the sealing element (25) is a constituent part of an actuation element (29) which substantially envelops the pipe section (22) and is provided with a momentary contact switch (28) arranged on the side opposite the sealing element (25) relative to the pipe section (22) as a further constituent part.

8. An internal combustion engine according to any one of claims 5 to 7,
characterised in that the wall of the pipe section (22) close to the valve seat (24) is provided with a projection (23) which, together with a support part (26) of the actuation element (29), forms a labyrinth (32) for the disturbance air.

9. An internal combustion engine according to any one of claims 5 to 8,
characterised in that the support part (26) is connected to the momentary contact switch (28) via a snap-on connection for which a supporting rib (35) is provided.

10. An internal combustion engine according to any one of claims 5 to 9,
characterised in that the arms (27) of the support part (26) forming the snap-on connection are guided in guides (34) worked out of the pipe section (22).

11. An internal combustion engine with lambda control, with a measuring means (4) for the aspirated air quantity and with a disturbance element which influences the lambda control,
characterised in that the disturbance element is a control valve (10) which changes the pressure in the fuel supply system (8) and is in the form of a spring-loaded momentary contact switch (15) which only provides the desired disturbance in the fuel supply system (8) upon actuation.

12. An internal combustion engine according to claim 11,
characterised in that the control valve (10) is arranged within a fuel line (8d, 8f) or a fluid control line (8e) leading to a fuel pressure controller (8b).

## Revendications

1. Moteur à combustion interne avec régulation lambda, comportant un organe (4) mesurant le débit d'air aspiré ainsi qu'un organe de parasitage de la régulation lambda, caractérisé en ce que l'organe de parasitage est une soupape de commande (10) amenant de l'air parasite au moteur en aval de l'organe (10) de mesure du débit d'air et constituée par un bouton-poussoir (15, 28) sous tension élastique qui, en position de repos, obture l'extrémité libre d'une canalisation d'air (14, 23) débouchant dans le système d'aspiration (2) du moteur et libère cette extrémité quand elle est actionnée.

2. Moteur selon la revendication 1, caractérisé en ce que la soupape de commande (10) est montée dans le système d'aspiration (2) du moteur ou dans un canal d'air (9) débouchant dans ce système.

3. Moteur selon la revendication 2, caractérisé en ce que la soupape de commande (10) est une pièce de dérivation (12) présentant deux raccords (13a, 13b) au canal d'air (9) reliés entre eux ainsi qu'une conduite d'air (14) en dérivation sur la liaison de canal d'air (13c).

4. Moteur selon une des revendications précédentes, présentant les caractéristiques suivantes:
- le poussoir (15), lorsqu'il est actionné, interrompt la liaison de canal d'air (13c),
- le poussoir (15) présente une tête (15b) ayant sensiblement la forme d'un cylindre creux,
- la tête (15b) peut se déplacer dans un guide (15a),
- la tête (15b) entoure le guide (15a),
- la conduite d'air (14) se trouve à l'intérieur du guide (15a),
- une tige (15d) fixée à la pièce de dérivation (12) porte une plaquette d'étanchéité (15e) coopérant avec la tête (15b) de manière à obturer ou dégager l'extrémité libre de la conduite d'air (14).

5. Moteur selon une des revendications précédentes, caractérisé en ce que :
- la soupape de commande (10) se trouve dans un élément de canalisation (21) relié au système d'aspiration du moteur,
- la soupape (10) est équipée d'un élément obturateur (25) qui peut, contre l'action d'un élément élastique être soulevé du siège de soupape (24) en permettant dans cet état l'entrée d'air parasite dans le élément de canalisation (21),
- l'élément obturateur (25) et le siège de soupape (24) sont conçus de manière qu'une dépression dans l'élément de canalisation (21) a pour effet d'appliquer l'élément obturateur (25) sur le siège (24).

6. Moteur selon la revendication 5, caractérisé en ce que le siège de soupape (24) est creusé essentiellement dans la paroi d'une pièce tubulaire (22) qui peut être emmanchée, par un côté au moins, dans la partie de conduite (21).

7. Moteur selon la revendication 5 ou 6, caractérisé en ce que l'élément obturateur (25) est un composant d'un élément d'actionnement (2a) qui entoure essentiellement la pièce tubulaire (22) et qui a un autre composant constitué par un poussoir (28) monté, par rapport à la pièce tubulaire (22), du côté opposé à l'élément obturateur (25).

8. Moteur selon une des revendications 5 à 7, caractérisé en ce que la paroi de la pièce tubulaire (22) porte, près du siège de soupape (24) une saillie (23) qui forme avec un support (26) de l'élément d'actionnement (29) un labyrinthe (32) de passage d'air parasite.

9. Moteur selon une des revendications 5 à 8, caractérisé en ce que le support (26) est relié au poussoir (28) par une liaison à encliquetage pour laquelle est prévue une nervure d'appui (35).

10. Moteur selon une des revendications 5 à 9, caractérisé en ce que les bras (27) de support (26) assurant la liaison par encliquetage sont logés dans des guides en saillie sur la pièce tubulaire (22).

11. Moteur à combustion interne avec régulation lambda, comportant un organe (4) mesurant le débit d'air aspiré ainsi qu'un organe de parasitage de la régulation lambda, caractérisé en ce que l'organe de parasitage est une soupape de commande (10) modifiant la pression régnant à l'intérieur du système d'alimentation (8) en carburant, cette soupape ayant la forme d'un poussoir (15) chargé élastiquement, qui provoque le parasitage désiré du système d'alimentation (8) seulement lorsqu'on l'actionne.

12. Moteur selon la revendication 11, caractérisé en ce que la soupape de commande (10) est montée dans une canalisation de carburant (8d, 8f) ou dans une canalisation (8e) de commande hydraulique d'un régulateur (8b) de la pression du carburant.
